# EUROPEAN PATENT APPLICATION

(11) **EP 4 574 612 A1**
(43) Date of publication of application: **25.06.2025**
(21) Application number: 23218764.1
(22) Date of filing: 20.12.2023
(51) Int. Cl.: B60W 50/00, B60W 60/00

(54) **METHOD FOR DETERMINING CONTROL PARAMETERS FOR DRIVING A VEHICLE**

(71) Applicant: Aptiv Technologies AG, 8200 Schaffhausen (CH)
(72) Inventor: Schäfer, Maximilian, 42117 Wuppertal (DE); ZHAO, Kun, 40235 Düsseldorf (DE)
(74) Representative: Manitz Finsterwald Patent- und Rechtsanwaltspartnerschaft mbB

(57) **Abstract**

A method is provided for determining control parameters (460) for driving a host vehicle (100). Static and dynamic characteristics detected in an external environment of the host vehicle (100) are determined via a perception system (110) of the host vehicle (100). Via a processing unit (121) of the host vehicle (100), a plurality of driving hypotheses is determined by applying the static and dynamic characteristics, wherein each driving hypothesis includes a drivable path and a distribution of trajectories which matches to the drivable path for the host vehicle, a most suitable driving hypothesis is selected from the plurality of driving hypotheses, a most suitable trajectory is determined for the distribution of trajectories associated with the most suitable driving hypothesis, and the control parameters for driving the host vehicle (100) are determined in accordance with the most suitable trajectory.

## Description

### FIELD

The present disclosure relates to a computer implemented method for determining control parameters for driving a host vehicle.

### BACKGROUND

For autonomous driving and various advanced driver assistance systems (ADAS), it is an important and still challenging task to provide or to support a safe motion of a host vehicle in a reliable manner. This task includes the main components of perception, prediction, planning and control.

Recently, machine learning has more and more dominated the field of perception systems. That is, machine learning algorithms have been applied to perception sensors and to the data provided by these sensors. This is especially the case for vision-based perception systems. Similarly, the field of traffic scene and trajectory prediction is also dominated by approaches based on machine learning. This is due to the high complexity of a real world traffic scene for which it is not feasible or possible to model the scene explicitly. In the field of planning and control, however, approaches based on models and rules still play the lead.

The different approaches for perception and prediction on the one hand and planning and control on the other hand may entail a high computational effort and the need of suitable interfaces between the respective realizations based on different approaches. However, machine learning has shown strong capabilities to implement complex systems or tasks without explicitly and analytically defining and modeling the problems behind it.

Accordingly, there is a need to have a method which allows to combine the perception, prediction, planning and controlling tasks in order to provide a human-like understanding of a traffic scene and to assure safety when driving a vehicle.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining control parameters for driving a host vehicle. According to the method, static and dynamic characteristics which are detected in an external environment of the host vehicle are determined via a perception system of the host vehicle. Via a processing unit of the host vehicle, the following method steps are performed. A plurality of driving hypotheses is determined by applying the static and dynamic characteristics, wherein each driving hypothesis includes a drivable path and a distribution of trajectories for the host vehicle which matches to the drivable path. A most suitable driving hypothesis is selected from the plurality of driving hypotheses. A most suitable trajectory is determined for the distribution of trajectories associated with the most suitable driving hypothesis. Finally, the control parameters for driving the host vehicle are determined in accordance with the most suitable trajectory.

The perception system of the host vehicle may include a radar system, a LiDAR system and/or one or more cameras in order to monitor the external environment or surroundings of the host vehicle. Therefore, the perception system may be configured to monitor a dynamic context of the vehicle which includes a plurality of other road users moving in the external environment. The other road users may include other vehicles and/or pedestrians, for example. Moreover, the perception system may also be able to determine and track the state of motion of the host vehicle itself. In addition, the perception system may be configured to monitor a static context in the external environment, i.e. static entities like lane items, traffic signs etc., for example regarding their position and semantic properties.

The dynamic characteristics determined by the perception system may therefore reflect the current state of motion of the other road users and of the host vehicle. In contrast, the static characteristics may be related to the static entities in the environment of the host vehicle, and they may provide boundary conditions for the movement of the other road users and of the host vehicle.

The drivable path is defined as a spatially distributed space in which the host vehicle is able to drive. Hence, it just describes a drivable area or free space close to the host vehicle without providing any requirement how the host vehicle may drive within this area. The drivable path may be represented in a vector form, e.g. as a polygon, or as a grid map, wherein the representation may depend on the specific implementation. For example, a prediction module of the processing unit may be implemented in such a manner as to determine the drivable path and the distribution of the trajectories for the host vehicle, i.e. each driving hypothesis, by applying the static and dynamic characteristics.

In contrast to the drivable path, a trajectory includes spatial and temporal information. In detail, the trajectory may include a series of positions which also comprises a time horizon associated therewith. An intuitive representation of a trajectory may be a series of points. For determining reliable control parameters for driving the host vehicle, each driving hypothesis therefore includes both of the drivable path and the distribution of trajectories since, for example, the drivable path may also cover the free space in front of a leading vehicle close to the host vehicle, while a predicted trajectory or distribution of trajectories will not jump in front of such a leading vehicle, i.e. except for performing a lane change in order to do so. Instead, a predicted trajectory may be expected to maintain a safety distance behind a specific future trajectory of such a leading vehicle.

A plurality of driving hypotheses including respective drivable path and a respective distribution of trajectories needs to be considered for determining the control parameters since, in the real world, the external environment of the host vehicle usually involves multiple feasible paths for the future movement of the host vehicle. Such a plurality of feasible paths may be due to intersections, roundabouts and even multiple lanes in case of a straight road. Each of these feasible paths for the host vehicle may require a different driving behavior and therefore a different distribution of possible trajectories.

For selecting the most suitable driving hypotheses, different criteria may be applied including specific cost functions which may be evaluated for selecting the hypotheses, and including navigation information for the host vehicle. For example, the selected driving hypothesis has to comply with a navigation route which may be determined in advance for the host vehicle. The specific cost functions for assessing the driving hypotheses may depend on the physical conditions for driving the vehicle, on safety requirements, on rule requirements and on comfort requirements, for example.

From the plurality of driving hypothesis, one hypothesis may be selected which may be related to a respective minimum of the specific cost functions. Similarly, specific cost functions may be applied in order to determine the most suitable trajectory for the distribution of the trajectories associated with the most suitable driving hypothesis which has been selected.

The distribution of trajectories may be represented by a group of possible points or positions for the host vehicle at different consecutive time steps. Based on the specific cost functions, the most suitable point or position may be determined for each time step, and such points or positions may be connected in order to provide a most suitable trajectory.

The control parameters for driving the host vehicle may include an acceleration and a yaw rate of the host vehicle, for example. The control parameters may also include an angle of the host vehicle's steering wheel, a front-wheel angle, etc.

The method according to the disclosure provides a general extendable and scalable framework for predicting the host vehicles drivable paths and trajectory and for controlling the host vehicle. In addition, a human-like scene understanding and prediction is provided in order to support the further controlling module of the host vehicle. Moreover, the drivable path and the trajectory distribution are determined at the same time, whereas according to known methods, the drivable area of free space is usually determined first before considering the trajectory. Therefore, the reliability for determining proper control parameters for driving the vehicle is improved.

Predicting or determining the plurality of driving hypotheses including respective drivable paths and respective trajectory distributions may be implemented as a machine learning algorithm which may be trained via known drivable paths and known trajectories for specific traffic scenes. Moreover, the control parameters may be checked or controlled via machine learning algorithm as well. In addition, a model-based or rule-based approach may also be integrated into the method in order to assure safety, e.g. by performing suitable checks of the control parameters.

According to an embodiment, a respective set of cost functions may be determined with respect to each of the distribution of trajectories for each driving hypothesis. The most suitable driving hypothesis may be selected from the plurality of driving hypotheses by utilizing the respective set of cost functions and by relating the respective drivable path of each driving hypothesis to navigation information for the host vehicle.

As such, two different criteria have to be fulfilled for the selection of the most suitable driving hypothesis: based on the cost functions, e.g. by determining the respective minimum of the cost functions, a decision may be made regarding the most suitable driving hypothesis, and in addition, navigation requirements have to be fulfilled for the host vehicle. For example, the respective drivable path of the driving hypotheses may be checked regarding feasibility by an external map provided to a control system of the vehicle.

Moreover, by using the static and dynamic characteristics detected in the external environment of the host vehicle, a prediction may be determined for a traffic scene within the environment of the host vehicle. The predicted traffic scene may also be utilized for evaluating the set of cost functions associated with the respective driving hypothesis.

The prediction of the traffic scene may include a grid-based prediction for the state of motion of relevant road users, e.g. for the host vehicle itself, for other vehicles and for pedestrians. Hence, the actual traffic scene surrounding the host vehicle may influence the selection of the most suitable driving path and the most suitable trajectory since the set of cost functions may depend at least partly on the predicted traffic scene. That is, the set of cost functions being determined with respect to each of the distribution of trajectories for each driving hypothesis may be evaluated and modified based on the prediction for the traffic scene surrounding the host vehicle.

The cost functions may include a physically cost function which is related to physical conditions for the driving path and the distribution of trajectories belonging to the respective driving hypotheses, and the cost functions may further include a safety cost function which may be related to safety conditions for the driving path and the distribution of trajectories of the respective driving hypothesis. The safety cost function may be associated with a lower priority than the physical cost function.

Therefore, a hierarchy of the different types of cost functions may be introduced wherein the physical cost function representing the physical conditions may have the highest priority. This may be due to the fact that the physical conditions for driving cannot or should not be violated. In other words, the selected drivable path and the selected trajectory have to comply with the physical conditions anyway, even if safety conditions cannot be complied with. For example, the safety conditions may include a safety distance with respect to other road users.

In addition, the cost functions may further include a rule cost function which may be related to rules for the driving path and the distribution of trajectories of the respective driving hypothesis. The rule cost function may be associated with a lower priority than the safety cost function. That is, the rules being represented by the rule cost function may be violated if such a violation is relevant for the safety of the host vehicle. The rules may be related to a solid line on the road which should not be crossed, to a stop requested by a specific traffic sign, to speed limits etc.

The cost functions may also include a comfort cost function which may be related to comfort for a passenger of the host vehicle with respect to the driving path and the distribution of trajectories of the respective driving hypothesis. The comfort cost function may be associated with a lower priority than the rule cost function. That is, comfort requirements with respect to a passenger of the host vehicle may be violated if this may be required in order to fulfil safety, rule and physical requirements.

A plurality of trajectories may be generated for the distribution of trajectories associated with the selected most suitable driving hypothesis. The set of cost functions associated with the most suitable driving hypotheses may be applied to the plurality of trajectories, and the most suitable trajectory may be selected from the plurality of trajectories by evaluating the cost functions.

In other words, the set of cost functions may be used for selecting the most suitable driving hypotheses, and within the selected most suitable driving hypotheses, the set of cost functions may also be used for selecting or determining the most suitable trajectory. The external conditions like physical conditions, safety conditions or rule conditions may be implicitly included in the cost functions, and therefore the external conditions may be automatically integrated in the framework for determining the most suitable drivable path and most suitable trajectory, e.g. by applying a machine learning algorithm.

According to a further embodiment, a planning time horizon may be determined for the plurality of trajectories generated for the distribution of trajectories associated with the most suitable driving hypothesis. By determining the planning time horizon, generating the plurality of trajectories may be facilitated. Moreover, the reliability of the predicted trajectories may be improved by restricting such a prediction to the planning time horizon.

In addition, at least one control point may be determined for each of the plurality of trajectories in accordance with the planning time horizon. The drivable path of the most suitable hypothesis and respective control points may be used by an algorithm which determines the control parameters associated with the most suitable trajectory.

The control point may be related to a spatial location which is to be reached by the final or most suitable trajectory of the host vehicle. However, the control point does not only comprise such a spatial location, but it may also include and define a velocity, an acceleration, a heading angle etc. of the host vehicle.

When the drivable path and the respective control points are fed to the algorithm for determining the control parameters, the most suitable trajectory may also be determined by evaluating the cost functions. The control parameters therefore define the course of the most suitable trajectory. The algorithm may be a machine learning algorithm. Moreover, the control points and the drivable path may be checked regarding predefined conditions provided by rules and/or models for the motion of the host vehicle.

As a further step, the control parameters may be refined with respect to the static characteristics determined for the external environment of the host vehicle, with respect to previously planned trajectories and/or with respect to predefined rules. Hence, the refinement of the control parameters may be performed based on further information provided by the perception system of the host vehicle. For example, a semantic segmentation of the host vehicle's environment may be provided and used for a possible adjustment of the control parameters.

By using the static and dynamic characteristics detected in the external environment of the host vehicle, a prediction may be determined for a traffic scene within the environment of the host vehicle and for target trajectories with respect to the most suitable trajectory. The control parameters determined for and defining the most suitable trajectory may be checked regarding safety by applying the prediction for the traffic scene and for the target trajectories.

The target trajectories may be trajectories for further road users being different from the host vehicle and being possibly in conflict with the most suitable trajectory. For the target trajectories, different possibilities may be considered which is usually referred to as multi-modality. For each of such multi-modal target trajectories, a respective probability may be provided in order to apply the target's trajectories when performing the safety check of the control parameters. Due to this, the reliability of the final control parameters may be improved.

In another aspect, the present disclosure is directed at a computer system, said computer system being configured to carry out several or all steps of the computer implemented method described herein.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

As used herein, terms like processing unit and module may refer to, be part of, or include an Application Specific Integrated Circuit (ASIC), an electronic circuit, a combinational logic circuit, a Field Programmable Gate Array (FPGA), a processor (shared, dedicated, or group) that executes code, other suitable components that provide the described functionality, or a combination of some or all of the above, such as in a system-on-chip. The processing unit may include memory (shared, dedicated, or group) that stores code executed by the processor.

In another aspect, the present disclosure is directed at a vehicle including a perception system, the computer system as described herein and a control system configured to receive control parameters determined by the computer system by carrying out the method as also described herein.

According to an embodiment, the control system may further be configured to validate the received control parameters and to apply the received control parameters during operation of the vehicle. Therefore, the control system may perform an additional and independent safety check for the intended trajectory of the host vehicle as provided by the received control parameters.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM); a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of a vehicle including components for performing a method according to the disclosure,
- Fig. 2: an illustration of a network architecture for a perception step and a prediction step of the method,
- Fig. 3: an overview of the method according to the disclosure,
- Fig. 4: a detailed illustration of the method according to the disclosure,
- Fig. 5: a flow diagram illustrating a method for determining control parameters for driving a host vehicle according to various embodiments,
- Fig. 6: an illustration of a system according to various embodiments, and
- Fig. 7: a computer system with a plurality of computer hardware components configured to carry out steps of a computer implemented method as described herein.

### DETAILED DESCRIPTION

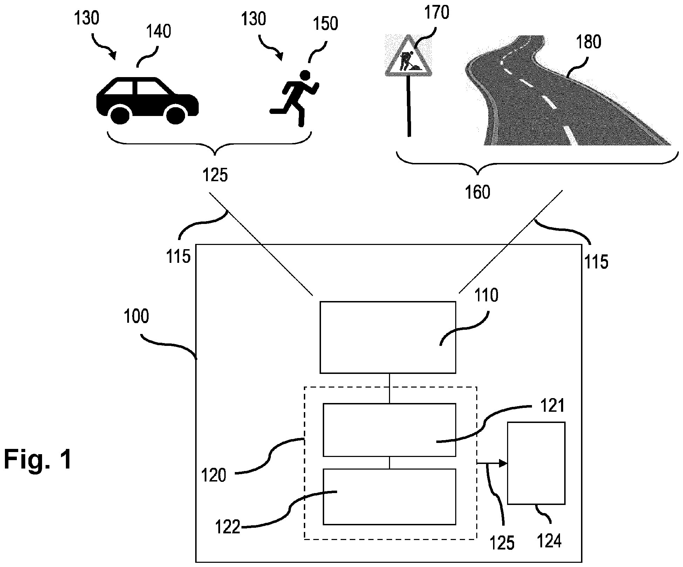

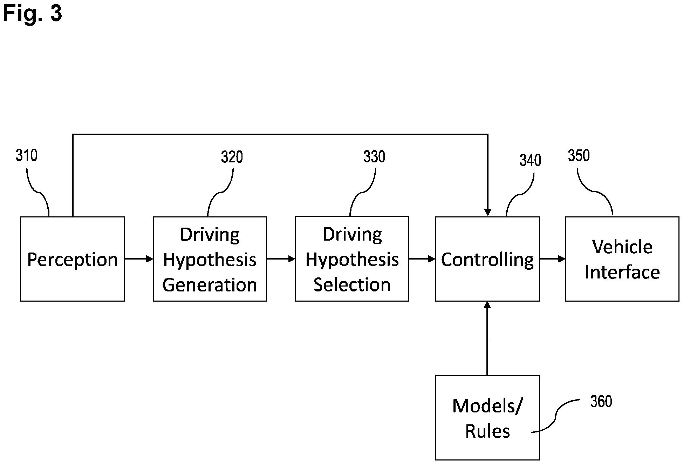

Fig. 1 depicts a schematic illustration of a vehicle 100 and of objects possibly surrounding the vehicle 100 in a traffic scene. The vehicle 100 includes a perception system 110 having an instrumental field of view which is indicated by lines 115. The vehicle 100 further includes a computer system 120 including a processing unit 121 and a data storage system 122 which includes a memory and a database, for example. The processing unit 121 is configured to receive data from the perception system 110 and to store data in the data storage system 122. The vehicle 100 further includes a control system 124 which is configured to control the actual motion of the vehicle 100. The control system 124 is connected to the computer system 120 via a vehicle interface 125, 350 (see also Fig. 3).

The perception system 110 may include a radar system, a LiDAR system and/or one or more cameras in order to monitor the external environment or surroundings of the vehicle 100. Therefore, the perception system 110 is configured to monitor a dynamic context 125 of the vehicle 100 which includes a plurality of road users 130 which are able to move in the external environment of the vehicle 100. The road users 130 may include other vehicles 140 and/or pedestrians 150, for example.

The perception system 110 is also configured to monitor a static context 160 of the vehicle 100. The static context 160 may include traffic signs 170 and lane markings 180, for example. Therefore, the perception system 110 is configured to determine static and dynamic characteristics of the road users 130. The perception system 100 determines the dynamic and static characteristics of the road users 130 for a predetermined number of time steps, e.g. for each 0.5s.

The dynamic characteristics include a current position, a current velocity and an object class of each road user 130. The current position and the current velocity are determined by the perception system 110 with respect to the vehicle 100, i.e. with respect to a coordinate system having its origin e.g. at the center of mass of the vehicle 100, its x-axis along a longitudinal direction of the vehicle 100 and its y-axis along a lateral direction of the vehicle 100. Similarly, the static characteristics include a position, dimensions and an object class of the objects like the traffic signs and the lane markings 170, 180 constituting the static context 160.

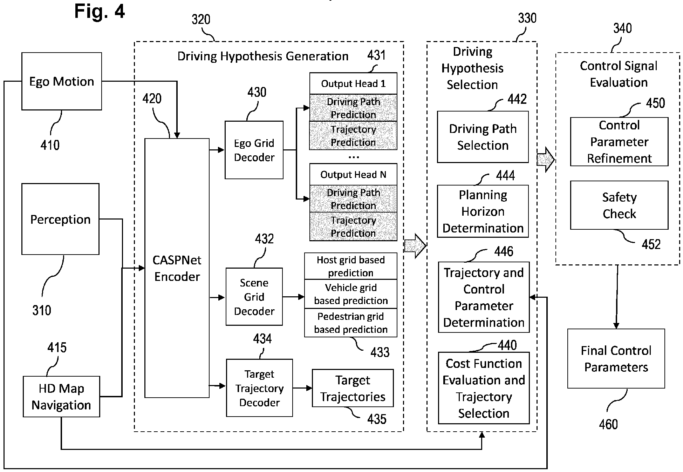

The computer system 120 transfers the result or output of the method according to the disclosure, i.e. control parameters 460 (see Fig. 4), to the control system 124 via the vehicle interface 125, 350 (see also Fig. 3) in order to enable the control system 124 to reliably control the future motion of the vehicle 100.

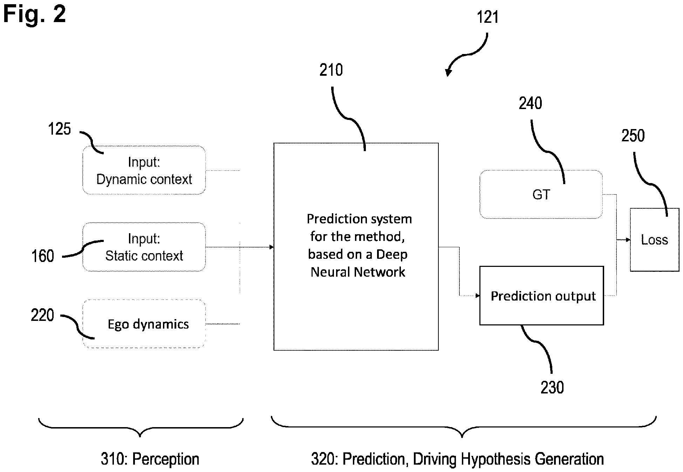

Fig. 2 depicts details of the processing unit 121 which is included in the computer system 120 of the vehicle 100 (see Fig. 1). The processing unit 121 includes a prediction system for the method of the disclosure, wherein the prediction system is based on a deep neural network 210. Perception steps of the method are performed via the perception system 110 of the vehicle 100 (see Fig. 1) and provide the deep neural network 210 with different inputs being relevant for the motion of the vehicle 100. Based on these inputs, the deep neural network 210 performs prediction steps 320 (see also Figs. 3 and 4) of the method.

The inputs for the deep neural network 210 include the dynamic context 125, i.e. the dynamic characteristics of the road users 130, the static context 160 and ego dynamics 220 of the vehicle 100. The deep neural network 210 is used to generate a prediction output 230. When training the deep neural network 210, the prediction output 230 and a ground truth (GT) 240 are provided to a loss function 250 for optimizing the deep neural network 210.

The static context 160 includes static environment data which include the respective positions, the respective dimensions and the specific class of static entities in the environment of the vehicle 100, e.g. positions and dimensions of the traffic sign 170 and of the lane markings 180, for example. The static context 160, i.e. the static environment data of the vehicle 100, is determined via the perception system 110 of the vehicle 100, as described above, and additionally or alternatively derived from a predetermined map which is available for the surroundings of the vehicle 100.

The static context 160 is represented by one or more of the following:
- a rasterized image from a HD (high definition) map, wherein the high definition map covers e.g. accurate positions of the lane marking such that the vehicle 100 is provided with accurate information regarding its surrounding when it can be accurately located in the HD map,
- a drivable area determined via the perception system 110 of the vehicle 100, for example a grid map or image data structure, wherein each pixel of such a map or image represents the drivability of the specific area in the instrumental field of view of the perception system 110,
- a lane/road detection via sensors of the perception system 110, wherein using the detected lane markings, road boundaries, guard rails etc. from the sensor, the perception system 110 may be configured to build a grid map or image like data being similar to a rasterized map in order to describe the static context 160,
- a static occupancy grid map.

The ego dynamics 220 can also be represented as one of the road users 130 and may therefore be included in the dynamic context input.

As will be described in detail below, the deep neural network 210 includes an encoder and different decoder heads for providing the prediction output 230 in form of a selected or most suitable driving hypothesis which includes a drivable path or driving path prediction and a trajectory prediction, i.e. a distribution of trajectories associated with the drivable path such that the distribution of trajectories matches to the drivable path. For the selected driving hypothesis, a most suitable trajectory is determined. For this trajectory, control parameters are determined (see e.g. step 446 in Fig. 4) for driving the vehicle 100.

The ground truth 240 defines the task of the deep neural network 210. It covers, for example, information regarding positions as an occupancy probability and ingrid offsets, and further properties like velocities and accelerations, and/or other regression and classification tasks, for example future positions, velocities, maneuvers etc. of the road users 130 which are monitored within the current traffic scene.

Fig. 3 depicts an overview of the most important steps and items which are relevant for the method according to disclosure. The method includes the perception step 310 as described above. Data provided by the perception step 310 is used by the step of driving hypothesis generation 320 which is also described above in context of Fig. 2 and is described in more detail below in context of Fig. 4.

The driving hypothesis which are generated by the step 320 of driving hypothesis generation are evaluated in the next step 330 of driving hypothesis selection in order to determine or select a most suitable driving hypothesis from the plurality of driving hypotheses.

As mentioned above, each driving hypothesis includes a drivable path and a distribution of trajectories for the host vehicle 100. The drivable path refers to an area or a free space in which the host vehicle 100 may drive in future without being in conflict with e.g. static items in the external environment of the host vehicle 100. In contrast, each trajectory associated with the distribution of trajectories is also temporally defined. That is, each trajectory includes a planning time horizon associated therewith. Each trajectory should not have any conflict with other road users within the planning or future time horizon associated with the respective trajectory. A typical representation of a trajectory is a series of points associated with respective time steps. For the distribution of trajectories associated with the respective driving hypothesis, a respective plurality of trajectories is determined.

When selecting the most suitable driving hypothesis in step 330, a most suitable trajectory is determined for the distribution of trajectories associated with the most suitable driving hypothesis. This is performed by generating and evaluating cost functions in order to assess the trajectories with respect to different criteria. In accordance with the most suitable trajectory, control parameters are determined for driving the host vehicle 100. The control parameters include an acceleration and a yaw rate of the host vehicle, for example, and may further include a steering wheel angle and/or a front wheel angle of the host vehicle 100. Conversely, the control parameters describe or define the most suitable trajectory for driving the host vehicle 100.

In a further controlling step 340, the control parameters for driving the host vehicle 100 are further refined by considering external conditions including a traffic scene surrounding the host vehicle 100 and/or static objects. The external conditions may also be provided as models and/or rules 360. In addition, a safety check may be performed for the refined control parameters in order to avoid a conflict with safety conditions which are also provided by the models and/or rules 360. The output of the controlling step 340 includes final control parameters which are transferred to a vehicle interface 350. That is, the final control parameters are received by further modules of the host vehicle 100 in order to provide a basis for driving the host vehicle 100.

Fig. 4 schematically depicts details in addition to the main steps 310 to 340 as shown in Fig. 3 for the method according to the disclosure. In addition to the perception 310 which determines static and dynamic characteristics detected in an external environment of the host vehicle 100, data 410 related to an ego motion of the host vehicle 100 and data 415 related to a high definition map (HD map) as described above and to a navigation of the host vehicle 100 is provided as input for the deep neural network 210 (see also Fig. 2) which includes a CASPNet encoder 420 as a first part of the driving hypothesis generation 320. The CASPNet encoder 420 is a machine learning algorithm as described, for example, in Schaefer, M. et al: "Context-aware scene production network (CASPNet)", arXiv: 2201.06933v1, January 18, 2022. However, other methods and algorithms may also be used as encoder for the driving hypothesis generation 320.

The driving hypothesis generation 320 further includes three different decoders, i.e. an ego grid decoder 430, a scene grid decoder 432 and a target trajectory decoder 434. The CASPNet encoder 420 or another system used as encoder provides encoded grid maps which may also be called feature maps and which may provide, after decoding, a probability distribution for locations and other dynamic properties of the road users 130 (see Fig. 1) over multiple time steps. These maps also include information regarding the static environment of the host vehicle 100 in an encoded form. After decoding, each cell of such a grid map includes different channels which comprise the probability for the location of the road users 130 at a specific timestep and additional channels for different dynamic properties of the road users 130 including the host or ego vehicle 100.

The decoders 430, 432, 434 receive the feature maps as provided by the encoder 420 in order to track or decode specific information via respective output heads 431, 433, 435. The ego grid decoder 430 is configured to provide N driving hypotheses for the host or ego vehicle 100 via N output heads 431, i.e. output head 1 to output head N. Each driving hypothesis provided by the respective output head includes a respective driving path prediction for the drivable path and a respective trajectory prediction, i.e. a trajectory distribution, for the host or ego vehicle 100. The respective trajectory distribution includes a specific distribution of possible positions or points for a respective time step.

By processing the output of the encoder 420 in a different manner, the scene grid decoder 432 is configured to provide an output 433 which includes a host grid-based prediction, a vehicle grid-based prediction and a pedestrian grid-based prediction for the traffic scene in which the host vehicle 100 is currently located. In contrast to the driving hypotheses which relate to the host vehicle 100 only and which include a respective driving path or free space and information regarding possible trajectories for the host vehicle, the output 433 of the scene grid decoder 432 is related to the entire traffic scene surrounding the host vehicle 100, i.e. the entire dynamic contact 125 as schematically depicted in Fig. 1.

Furthermore, the target trajectory decoder 434 is configured to provide target trajectories 435 which are possibly in conflict with the trajectory prediction provided by the ego grid decoder 430.

The entire output of the driving hypothesis generation 320, i.e. the output 431, 433, 435 of the three decoders 430, 432, 434 is transferred to the step of driving hypothesis selection 330. In order to select the most suitable driving hypothesis, a set of cost functions is generated and evaluated at 440. The cost functions are related to each of the trajectory distributions as provided by the output heads 431 of the ego grid controller 430 and include a physical cost function, a safety cost function, a rule cost function and comfort cost function, for example. These cost functions are generated for the trajectory distribution prediction provided by the ego grid decoder 430 by considering the different aspects of physical conditions, safety conditions, rules and comfort conditions. Moreover, the output of the scene grid decoder 430 is considered when estimating the cost function at 440. Hence, the predictions performed for the traffic scene, i.e. for the dynamic context 125 of the host vehicle 100, influence the specific values of the cost functions as determined at 440.

The cost functions as determined at 440 provide a first criterion for the driving path selection at 442. That is, the respective driving path prediction and therefore the entire driving hypothesis including the driving path prediction and the trajectory distribution prediction are selected by applying the set of cost functions as determined at 440.

When selecting the most suitable driving hypothesis, there is a hierarchy or ranking of the different cost functions as mentioned above. The highest priority or relevance is associated with the physically cost function since the physically conditions for the movement of the host vehicle 100 cannot be changed. The safety cost function is therefore associated with a lower priority than a physical cost function. Similarly, the rule cost function is associated with a lower priority than the safety cost function since safety is more important than obeying rules. Moreover, the comfort cost function is associated with a lower priority than the rule cost function, i.e. with the lowest priority.

As a second criterion for determining the most suitable driving hypothesis and the driving path at 442, the driving path of each driving hypothesis is related to navigation information for the host vehicle 100 as provided at 415, for example.

At 444, a planning time horizon is determined which is used when generating a plurality of trajectories for the distribution of trajectories associated with the selected or most suitable driving hypothesis. For the planning time horizon as determined at 444, the most suitable trajectory and control parameters defining such a trajectory are determined at 446. In detail, the cost functions as described above are applied at 440 again in order to select a most suitable trajectory from the plurality of trajectories which are generated for the distribution of trajectories associated with the selected driving hypothesis. In addition, the data 410 related to the ego motion is considered at step 446 of trajectory and control parameter determination.

In accordance with the planning time horizon as determined at 444, at least one control point is determined or sampled for each of the plurality of trajectories belonging to a trajectory distribution as provided by the output head 431. The drivable path as selected at 442 and the respective sampled control points are used by a machine learning algorithm which determines the control parameters associated with the most suitable trajectory. The control parameters include an acceleration and a yaw rate of the host vehicle 100. Additionally, the control parameters may also include a steering wheel angle or a front wheel angle of the host vehicle 100. Further details for determining the control parameters by applying a machine learning algorithm are provided in EP 4 245 629 A1, for example.

The output of the step 330 of driving hypothesis selection is transferred to the controlling step 340, i.e. to a control signal evaluation. The controlling step 340 includes a refinement step 450 for the control parameters and a safety check 452 which is applied to the refined control parameters. The control parameters are refined at 450 with respect to the static characteristics or the static contact 160 (see Fig. 1) of the host vehicle 100, with respect to previously planned trajectories and with respect to predefined rules. In detail, a semantic segmentation of the static contact 160 including e.g. information related to lane markings, static objects etc. is used as an input for the step 450 of control parameter refinement.

The safety check 452 relies at least partly on the target trajectories 435 as provided by the target trajectory decoder 434. If the safety check 452 fails, i.e. if the control parameters as refined at 450 are not in line with the safety conditions relevant for the host vehicle 100, the method goes back to step 330 of driving hypothesis selection in order to determine a new set of reliable control parameters at 446. If the safety check 452 is passed, final control parameters are output by the method according to the disclosure at 460.

The final control parameters as provided at 460 are transferred via the vehicle interface 350 (see Fig. 3) to the control system 124 (see Fig. 1) of the host vehicle 100. As an optional step, the control system 124 is configured to validate the received control parameters, i.e. to perform an additional safety check, for example, in addition to the safety check 452 as shown in Fig. 4. After a successful validation of the received control parameters, the control system 124 applies the received control parameters during the operation of the host vehicle 100.

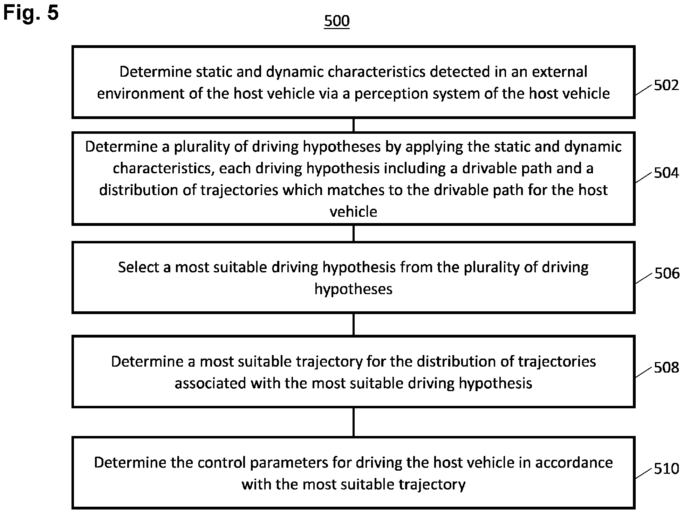

Fig. 5 shows a flow diagram 500 illustrating a method for determining control parameters for driving a host vehicle. At 502, static and dynamic characteristics detected in an external environment of the host vehicle may be determined via a perception system of the host vehicle. At 504, a plurality of driving hypotheses may be determined via a processing unit of the host vehicle by applying the static and dynamic characteristics, wherein each driving hypothesis may include a drivable path and a distribution of trajectories which matches to the drivable path for the host vehicle. At 506, a most suitable driving hypothesis may be selected from the plurality of driving hypotheses via the processing unit. At 508, a most suitable trajectory may be determined via the processing unit for the distribution of trajectories associated with the most suitable driving hypothesis. At 510, the control parameters may be determined for driving the host vehicle in accordance with the most suitable trajectory.

According to various embodiments, a respective set of cost functions may be determined for each driving hypothesis with respect to each of the distribution of trajectories, and the most suitable driving hypothesis may be selected from the plurality of driving hypotheses by utilizing the respective set of cost functions and by relating the drivable path of each driving hypothesis to navigation information for the host vehicle.

According to various embodiments, a prediction may be determined for a traffic scene within the environment of the host vehicle by using the static and dynamic characteristics detected in the external environment of the host vehicle, and the predicted traffic scene may be utilized for evaluating the set of cost functions.

According to various embodiments, the cost functions may include a physical cost function which may be related to physical conditions for the driving path and the distribution of trajectories of the respective driving hypothesis, the cost functions may further include a safety cost function which may be related to safety conditions for the driving path and the distribution of trajectories of the respective driving hypothesis, and the safety cost function may be associated with a lower priority than the physical cost function.

According to various embodiments, the cost functions may further include a rule cost function which may be related to rules for the driving path and the distribution of trajectories of the respective driving hypothesis, and the rule cost function may be associated with a lower priority than the safety cost function.

According to various embodiments, the cost functions may further include a comfort cost function which may be related to comfort for a passenger of the host vehicle with respect to the driving path and the distribution of trajectories of the respective driving hypothesis, and the comfort cost function may be associated with a lower priority than the rule cost function.

According to various embodiments, a plurality of trajectories may be generated for the distribution of trajectories associated with the selected driving hypothesis, the set of cost functions associated with the most suitable driving hypothesis may be applied to the plurality of trajectories, and the most suitable trajectory may be selected from the plurality of trajectories by evaluating the cost functions.

According to various embodiments, a planning time horizon may be determined for the plurality of trajectories generated for the distribution of trajectories associated with the most suitable driving hypothesis.

According to various embodiments, at least one control point may be determined for each of the plurality of trajectories in accordance with the planning time horizon, and the drivable path and respective control points may be used by an algorithm which may determine the control parameters associated with the most suitable trajectory.

According to various embodiments, the control parameters may be refined with respect to the static characteristics determined for the external environment of the host vehicle, with respect to previously planned trajectories and/or with respect to predefined rules.

According to various embodiments, a prediction may be determined for a traffic scene within the environment of the host vehicle and for target trajectories with respect to the most suitable trajectory by using the static and dynamic characteristics detected in the external environment of the host vehicle, and the control parameters may be checked regarding safety by applying the predictions for the traffic scene and for the target trajectories.

Each of the steps 502, 504, 506, 508, 510 and the further steps described above may be performed by computer hardware components.

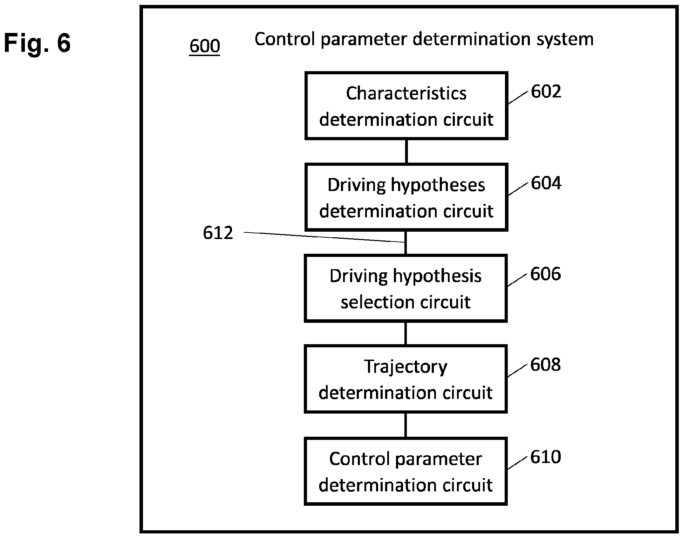

Fig. 6 shows a control parameter determination system 600 according to various embodiments. The control parameter determination system 600 may include a characteristics determination circuit 602, a driving hypotheses determination circuit 604, a driving hypothesis selection circuit 606, a trajectory determination circuit 608 and a control parameter determination circuit 610.

The characteristics determination circuit 602 may be configured to determine static and dynamic characteristics detected in an external environment of the host vehicle via a perception system of the host vehicle. The driving hypotheses determination circuit 604 may be configured to determine a plurality of driving hypotheses by applying the static and dynamic characteristics, each driving hypothesis including a drivable path and a distribution of trajectories for the host vehicle. The driving hypothesis selection circuit 606 may be configured to select a most suitable driving hypothesis from the plurality of driving hypotheses. The trajectory determination circuit 608 may be configured to determine a most suitable trajectory for the distribution of trajectories associated with the most suitable driving hypothesis. The control parameter determination circuit 610 may be configured to determine the control parameters for driving the host vehicle in accordance with the most suitable trajectory.

The characteristics determination circuit 602, the driving hypotheses determination circuit 604, the driving hypothesis selection circuit 606, the trajectory determination circuit 608 and the control parameter determination circuit 610 may be coupled to each other, e.g. via an electrical connection 612, such as e.g. a cable or a computer bus or via any other suitable electrical connection to exchange electrical signals.

A "circuit" may be understood as any kind of a logic implementing entity, which may be special purpose circuitry or a processor executing a program stored in a memory, firmware, or any combination thereof.

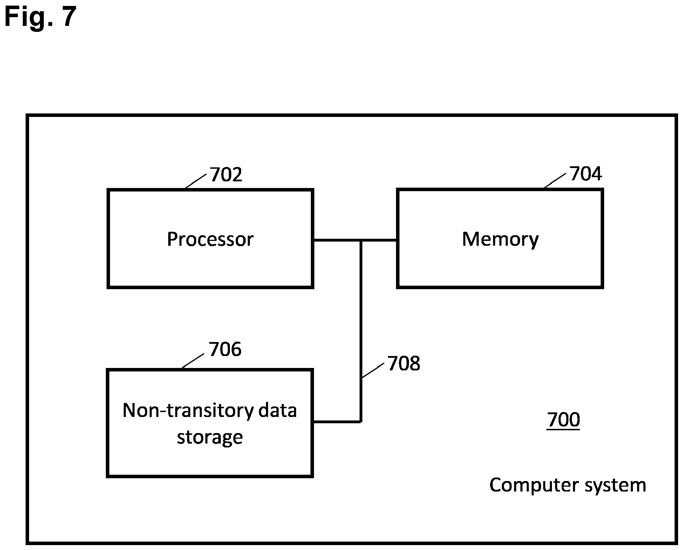

Fig. 7 shows a computer system 700 with a plurality of computer hardware components configured to carry out steps of a computer implemented method for integrating a radar sensor in a vehicle according to various embodiments. The computer system 700 may include a processor 702, a memory 704, and a non-transitory data storage 706.

The processor 702 may carry out instructions provided in the memory 704. The non-transitory data storage 706 may store a computer program, including the instructions that may be transferred to the memory 704 and then executed by the processor 702.

The processor 702, the memory 704, and the non-transitory data storage 706 may be coupled with each other, e.g. via an electrical connection 708, such as e.g. a cable or a computer bus or via any other suitable electrical connection to exchange electrical signals.

As such, the processor 702, the memory 704 and the non-transitory data storage 706 may represent the characteristics determination circuit 602, the driving hypotheses determination circuit 604, the driving hypothesis selection circuit 606, the trajectory determination circuit 608 and the control parameter determination circuit 610, as described above.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the control parameter determination system 600 and/or for the computer system 700.

### Reference numeral list

- 100: vehicle
- 110: perception system
- 115: field of view
- 120: computer system
- 121: processing unit
- 122: memory, database
- 124: control system
- 125: dynamic context
- 130: road users
- 140: vehicle
- 150: pedestrian
- 160: static context
- 170: traffic sign
- 180: lane markings
- 210: prediction system, deep neural network
- 220: ego dynamic of the host vehicle
- 230: prediction output
- 240: ground truth
- 250: loss function
- 310: perception
- 320: driving hypothesis generation
- 330: driving hypothesis selection
- 340: controlling
- 350: vehicle interface
- 360: models and rules
- 410: data related to the ego motion of the vehicle
- 415: high definition map and navigation information
- 420: encoder
- 430: ego grid decoder
- 431: output heads providing driving hypotheses
- 432: scene grid decoder
- 433: grid based prediction for the traffic scene
- 434: target trajectory decoder
- 435: target trajectories
- 440: cost function evaluation and trajectory selection
- 442: driving path selection
- 444: planning horizon determination
- 446: trajectory and control parameter determination
- 450: control parameter refinement
- 452: safety check
- 460: final control parameters

- 500: flow diagram illustrating a method for determining control parameters for driving a host vehicle
- 502: step of determining static and dynamic characteristics detected in an external environment of the host vehicle via a perception system of the host vehicle
- 504: step of determining a plurality of driving hypotheses by applying the static and dynamic characteristics, each driving hypothesis including a drivable path and a distribution of trajectories which matches to the drivable path for the host vehicle
- 506: step of selecting a most suitable driving hypothesis from the plurality of driving hypotheses
- 508: step of determining a most suitable trajectory for the distribution of trajectories associated with the most suitable driving hypothesis
- 510: step of determining the control parameters for driving the host vehicle in accordance with the most suitable trajectory
- 600: control parameter determination system
- 602: characteristics determination circuit
- 604: driving hypotheses determination circuit
- 606: driving hypothesis selection circuit
- 608: trajectory determination circuit
- 610: control parameter determination circuit
- 612: connection

- 700: computer system
- 702: processor
- 704: memory
- 706: non-transitory data storage
- 708: connection

## Claims

1. Computer implemented method for determining control parameters (460) for driving a host vehicle (100),
the method comprising:
determining static and dynamic characteristics detected in an external environment of the host vehicle (100) via a perception system (110) of the host vehicle (110),
via a processing unit (121) of the host vehicle:
determining a plurality of driving hypotheses by applying the static and dynamic characteristics, each driving hypothesis including a drivable path and a distribution of trajectories which matches to the drivable path for the host vehicle (100),
selecting a most suitable driving hypothesis from the plurality of driving hypotheses,
determining a most suitable trajectory for the distribution of trajectories associated with the most suitable driving hypothesis,
determining the control parameters (460) for driving the host vehicle (100) in accordance with the most suitable trajectory.

2. Method according to claim 1, wherein
for each driving hypothesis, a respective set of cost functions is determined with respect to each of the distribution of trajectories, and
the most suitable driving hypothesis is selected from the plurality of driving hypotheses by utilizing the respective set of cost functions and by relating the drivable path of each driving hypothesis to navigation information (415) for the host vehicle (100).

3. Method according to claim 2, wherein
by using the static and dynamic characteristics detected in the external environment of the host vehicle (100), a prediction is determined for a traffic scene (433) within the environment of the host vehicle (100),
the predicted traffic scene (433) is utilized for evaluating the set of cost functions.

4. Method according to claim 2 or 3, wherein
the cost functions include a physical cost function which is related to physical conditions for the driving path and the distribution of trajectories of the respective driving hypothesis,
the cost functions include a safety cost function which is related to safety conditions for the driving path and the distribution of trajectories of the respective driving hypothesis, and
the safety cost function is associated with a lower priority than the physical cost function.

5. Method according to claim 4, wherein
the cost functions further include a rule cost function which is related to rules for the driving path and the distribution of trajectories of the respective driving hypothesis, and
the rule cost function is associated with a lower priority than the safety cost function.

6. Method according to claim 5, wherein
the cost functions further include a comfort cost function which is related to comfort for a passenger of the host vehicle (100) with respect to the driving path and the distribution of trajectories of the respective driving hypothesis, and
the comfort cost function is associated with a lower priority than the rule cost function.

7. Method according to any one of claims 2 to 6, wherein
a plurality of trajectories is generated for the distribution of trajectories associated with the selected driving hypothesis,
the set of cost functions associated with the most suitable driving hypothesis is applied to the plurality of trajectories, and
the most suitable trajectory is selected from the plurality of trajectories by evaluating the cost functions.

8. Method according to claim 7, wherein
a planning time horizon is determined for the plurality of trajectories generated for the distribution of trajectories associated with the most suitable driving hypothesis.

9. Method according to claim 8, wherein
at least one control point is determined for each of the plurality of trajectories in accordance with the planning time horizon, and
the drivable path and respective control points are used by an algorithm which determines the control parameters (460) associated with the most suitable trajectory.

10. Method according to any one of claims 1 to 9, wherein
the control parameters (460) are refined with respect to the static characteristics determined for the external environment of the host vehicle (100), with respect to previously planned trajectories and/or with respect to predefined rules.

11. Method according to any one of claims 1 to 10, wherein
by using the static and dynamic characteristics detected in the external environment of the host vehicle (100), a prediction is determined for a traffic scene (433) within the environment of the host vehicle and for target trajectories (435) with respect to the most suitable trajectory, and
the control parameters (460) are checked regarding safety by applying the predictions for the traffic scene (433) and for the target trajectories (435).

12. Computer system (120, 700), the computer system (120, 700) being configured to:
receive static and dynamic characteristics detected in an external environment of a host vehicle (100) via a perception system (110) of the host vehicle (100), and
carry out the computer implemented method of at least one of claims 1 to 11.

13. Vehicle (100) comprising:
a perception system (110),
the computer system (120, 700) of claim 12, and
a control system (124) configured to receive control parameters (460) determined by the computer system (120, 700) by carrying out the method of at least one of claims 1 to 11.

14. Vehicle (100) according to claim 13, wherein
the control system (124) is further configured to validate the received control parameters (460) and to apply the received control parameters (460) during operation of the vehicle (100).

15. Non-transitory computer readable medium comprising instructions for carrying out the computer implemented method of at least one of claims 1 to 11.
